# EUROPEAN PATENT APPLICATION

(11) **EP 4 607 601 A1**
(43) Date of publication of application: **27.08.2025**
(21) Application number: 24839977.6
(22) Date of filing: 03.07.2024
(51) Int. Cl.: H01M 4/04, G01N 21/88, G01B 11/06

(54) **ROLL MAP GENERATION SYSTEM AND METHOD FOR GENERATING ROLL MAP**

(30) Priority: 07.07.2023 KR 20230088071
(71) Applicant: LG Energy Solution, Ltd., Seoul 07335 (KR)
(72) Inventor: SIM, Min Kyu, Daejeon 34122 (KR); KIM, Min Su, Daejeon 34122 (KR); PARK, Jong Seok, Daejeon 34122 (KR); HAN, Ki Deok, Daejeon 34122 (KR); PARK, Su Wan, Daejeon 34122 (KR); KIM, June Hee, Daejeon 34122 (KR); SHIN, Jong Kwon, Daejeon 34122 (KR)
(74) Representative: BCKIP Part mbB
(86) International application number: PCT/KR2024/009337
(87) International publication number: WO 2025/014164

(57) **Abstract**

According to exemplary embodiments, provided in a method for generating a roll map. The method comprises the steps of: transmitting process information about an electrode sheet to a processor; updating a measurement condition of the processor on the basis of the process information; and collecting measurement data including measurement values on the basis of a measurement signal generated by measuring the electrode sheet, wherein the electrode sheet includes a plurality of coated lanes and a plurality of uncoated parts; and processing the measurement data on the basis of the measurement condition updated on the basis of the process information.

## Description

### [Technical Field]

The present invention relates to a system configured to generate a roll map indicating a lot that is a unit of a wound electrode sheet, and a roll map generating method. The present application claims the benefit of priority based on Korean Patent Application No. 10-2023-0088071, filed on July 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries have drastically decreased due to improved energy density and economies of scale and a range of battery electric vehicles (BEVs) have increased to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a roll map generating method. The roll map generating method includes: transmitting process information of an electrode sheet to a processor; updating measurement conditions of the processor based on the process information; collecting measurement data including measured values based on a measurement signal generated by measuring the electrode sheet, in which the electrode sheet includes a plurality of coated lanes and a plurality of uncoated parts; and processing the measurement data based on the measurement conditions updated based on the process information.

The measurement data may include thickness values of the electrode sheet or loading amount values of the electrode sheet.

The process information may include the number of the plurality of coated lanes.

A processor may be configured to process the measurement data of the electrode sheet based on the process information.

The processing of the measurement data of the electrode sheet may include matching the measured values of the measurement data to the plurality of coated lanes and the plurality of uncoated parts of the electrode sheet.

A processor may be configured to distinguish between the plurality of coated lanes and the plurality of uncoated parts based on a profile of the measurement data.

The roll map generating method may further include comparing the number of the plurality of coated lanes distinguished by the processor with the process information.

The roll map generating method may further include matching coordinates of coordinate data of each of the plurality of coated lanes to representative values of coordinate-related measurement data to collect the coordinate-related measurement data including the representative values, generating a roll map based on the coordinate-related measurement data, and providing a visualized roll map based on the roll map.

Each of the representative values may be an average of measured values of the measurement data of each of a plurality of sections of the electrode sheet.

The visualized roll map may include a visualization region displaying coordinate-related measurement data of each of the plurality of coated lanes in a way that distinguishes them from one another.

The visualized roll map may include a visualization region displaying qualities of the plurality of coated lanes in a way that distinguishes them from one another.

The process information may be transmitted in a JavaScript Object Notation (JSON) format file to the processor.

### [Advantageous Effects]

According to example embodiments of the present invention, a system for generating a roll map that enables feedback, feed forward, and tracking of an electrode process may be provided.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a plan view of a portion of an electrode sheet.
FIG. 3 is a graph showing measurement data of an electrode sheet.
FIG. 4 illustrates a visualized roll map.
FIG. 5 is a flowchart of a roll map generating method according to example embodiments.
FIG. 6 illustrates a roll map generating system according to example embodiments.
FIG. 7 illustrates a roll map generating system according to example embodiments.
FIG. 8 illustrates a roll map generating system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and may be understood according to meanings and concepts corresponding to the present invention on the basis of the principle that the inventor(s) of the application may appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention may not be described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should be understood that the sizes or proportions of components may not fully reflect the actual sizes or proportions thereof.

### (First Embodiment)

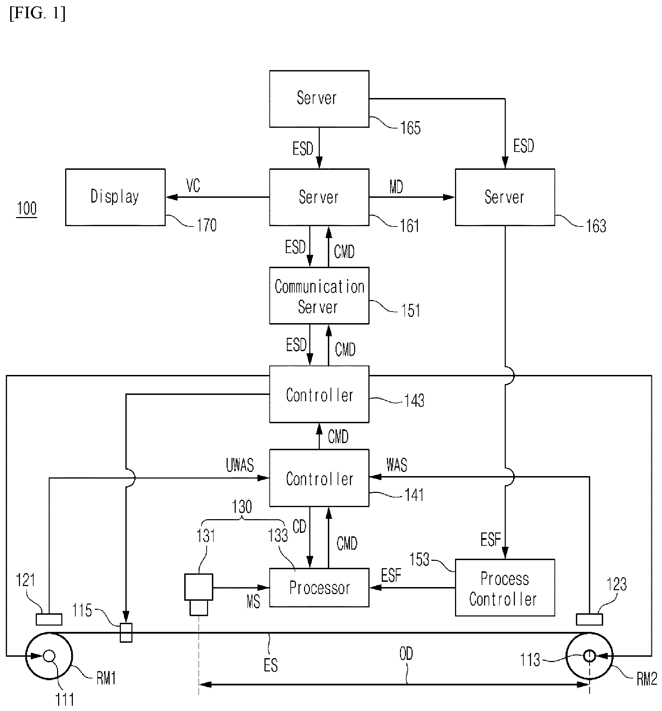

FIG. 1 illustrates a roll map generating system 100 according to example embodiments.

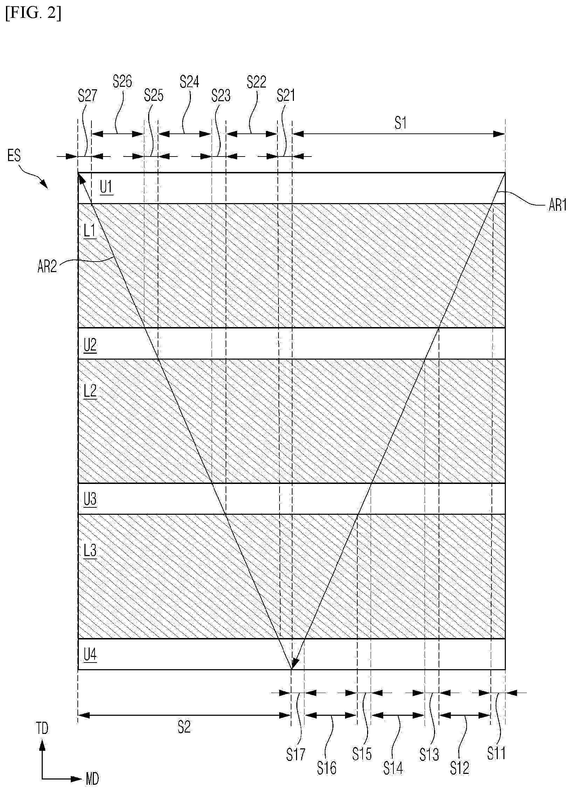

FIG. 2 is a plan view of a portion of an electrode sheet ES.

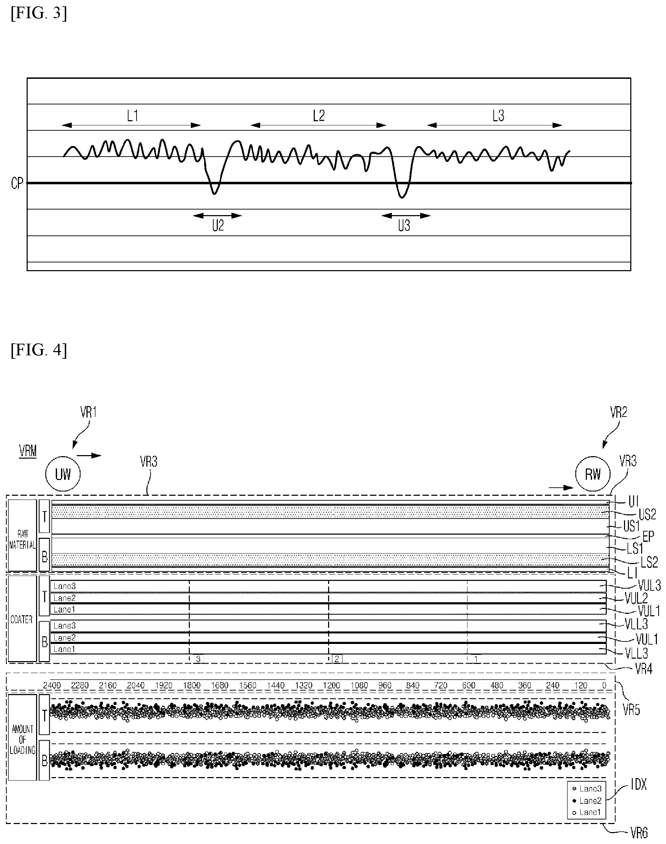

FIG. 3 is a graph showing measurement data collected from the electrode sheet ES. In FIG. 3, the vertical axis represents the amount of measurement and the horizontal axis represents time. In FIG. 3, the horizontal axis and the vertical axis are represented in arbitrary units.

FIG. 4 illustrates a visualized roll map VRM.

Referring to FIGS. 1 to 4, the roll map generating system 100 may include an unwinder 111, a rewinder 113, a processing apparatus 115, a first rotary encoder 121, a second rotary encoder 123, a measuring device 130, a first controller 141, a second controller 143, communication servers 151 and 153, servers 161, 163, and 165, and a display device 170.

The roll map generating system 100 may be configured to generate a roll map including data about an electrode sheet ES. The roll map may represent the electrode sheet ES based on coordinates indicating a position on the electrode sheet ES. A secondary battery manufacturing process may be performed on the electrode sheet ES. The roll map represents a history of processes performed on the electrode sheet ES and may include data related to coordinates. Accordingly, the roll map enables feedback, feedforwarding, and tracking of a secondary battery manufacturing process as described below.

A first electrode roll ER1 on which a previous process is performed may be loaded into the unwinder 111. The unwinder 111 may be configured to unwind the electrode sheet ES from the first electrode roll ER1. The rewinder 113 may wind the electrode sheet ES to form a second electrode roll ER2. Accordingly, the electrode sheet ES may be moved between the unwinder 111 and the rewinder 113. An electrode process is performed on the electrode sheet ES unwound from the first electrode roll ER1 and wound into the second electrode roll ER2, and thus may be a roll-to-roll process.

Roll maps may be generated in units of lots. The electrode sheet ES may be wound into the second electrode roll ER2 and be cut and separated after a certain winding length is reached. A lot is a production unit of the roll-to-roll process, and the separated second electrode roll ER2 is an example of lot. Accordingly, the server 161 may be configured to store a roll map of a previous process. The roll map of the previous process may correspond to the first electrode roll ER1. In addition, the server 161 may be configured to generate and store a roll map of a current process. The roll map of the current process may correspond to the second electrode roll ER2.

In a roll map, time series data constructed over time (i.e., according to the progress of a process) may be related to coordinate data CD collected based on the amount of movement (e.g., the amount of winding or the amount of unwinding) of the electrode sheet ES.

The manufacture of a secondary battery involves a series of different processes, and a leading process affects the following process. In this case, when time series data of the leading process does not directly match a workpiece, an intermediate product, and a product of the real world, it may be difficult to reflect the time series data of the leading process in the following process. Hereinafter, correcting the following process on the basis of data generated according to a result of the leading process may be referred to as feedforward.

Here, the workpiece may be an article provided as a result of each process, e.g., an electrode sheet of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product may be an article processed by the activation process to be operable as a secondary battery. The above-described definitions of the workpiece, the intermediate product, and the product are definitions thereof only in one aspect, and thus should not be understood as excluding general definitions thereof.

For feedforwarding, time series data of a roll map should be related with positions on workpieces, components, intermediate products, and products of the real world. The roll map may allow time series data to be related with coordinate data including coordinates of the positions on workpieces, the components, the intermediate products, and the products of the real-world. The roll map may provide matching between time series data and the workpieces, the components, the intermediate products, and the products of the real world, based on the coordinate data. Accordingly, generation of the roll map and feedforward based on the roll map may improve the productivity and quality of the secondary battery manufacturing process by digitizing and objectifying aspects of a process that depend on an operator's discretion. A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. **In** other words, the cell ID may be related to a roll map of the electrodes and the separator included in the battery cell. Accordingly, when an event such as a quality issue occurs in an already shipped battery cell, history data of the manufacture of the battery cell may be retrieved based on the cell ID to identify a cause of a problem in the manufacture of the battery cell.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a portion of the electrode sheet ES may be scrapped. As another example, the processing apparatus 115 may include a slitting knife, and the electrode sheet ES may be separated into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc., in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

The first rotary encoder 121 may be configured to sense the amount of the electrode sheet ES unwound from the first electrode roll ER1 by the unwinder 111. Accordingly, the first rotary encoder 121 may be configured to generate an unwinding amount signal UWAS indicating the amount of unwinding the electrode sheet ES. The first rotary encoder 121 may be configured to transmit the unwinding amount signal UWAS to the first controller 141. The first controller 141 may be configured to collect unwinding amount data based on the unwinding amount signal UWAS of the electrode sheet ES.

The second rotary encoder 123 may be configured to sense the amount of the electrode sheet ES wound into the second electrode roll ER2 by the rewinder 113. Accordingly, the second rotary encoder 123 may be configured to generate a winding amount signal WAS indicating the amount of winding the electrode sheet ES. The second rotary encoder 123 may be configured to transmit the winding amount signal WAS to the first controller 141. The first controller 141 may be configured to collect winding amount data based on the winding amount signal WAS of the electrode sheet ES.

In some cases, a portion of the electrode sheet ES may be scraped, and thus the amount of the electrode sheet ES unwound by the unwinder 111 may be different from the amount of the electrode sheet ES wound by the rewinder 113. In addition, when the electrode sheet ES is stretched due to pressure in the roll pressing process, the amount of the electrode sheet ES unwound by the unwinder 111 may be different from the amount of the electrode sheet ES wound by the rewinder 113.

The first controller 141 may be configured to collect the coordinate data CD of the electrode sheet ES, based on one of the winding amount signal WAS and the unwinding amount signal UWAS of the electrode sheet ES. For example, the first controller 141 may determine a moving distance of the electrode sheet ES in a current process step based on the winding amount signal WAS of the electrode sheet ES. Accordingly, a coordinate indicating a position of a portion of the electrode sheet ES, which is wound by the rewinder 113, on the electrode sheet ES may be determined at each point in time when the roll-to-roll process is performed on the electrode sheet ES. Furthermore, by calibrating coordinates using an offset length OD, a relative position of each of processed or sensed portions of the electrode sheet ES on the electrode sheet ES may be identified. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each portion of the electrode sheet ES. That is, arbitrary points on the electrode sheet ES may match a coordinate. The coordinate may be one-dimensional (1D) quantity in a machine direction MD (or a longitudinal direction) of the electrode sheet ES, but is not limited thereto. For example, the coordinate may be a two-dimensional (2D) quantity in the machine direction MD and a transverse direction TD (or a width direction) of the electrode sheet ES.

A sensing part 131 of the measuring device 130 may be configured to measure the electrode sheet ES to collect measurement data of the electrode sheet ES. The sensing part 131 may measure the electrode sheet ES by a scanning method. The sensing part 131 may be configured to scan the electrode sheet ES in the transverse direction TD. While the measuring device 130 performs scanning in the transverse direction TD, the electrode sheet ES may be moved in the machine direction MD by the unwinder 111 and the rewinder 113.

In FIG. 2, arrows AR1 and AR2 indicate relative movements of the sensing part 131 of the measuring device 130 with respect to the electrode sheet ES. The arrow AR1 indicates scanning performed by the sensing part 131 from a first edge of the electrode sheet ES to a second edge of the electrode sheet ES in the transverse direction TD, and the arrow AR2 indicates scanning performed by the sensing part 131 from the second edge of the electrode sheet ES to the first edge of the electrode sheet ES in the transverse direction TD.

Here, coated lanes L1, L2, and L3 are parts of the electrode sheet ES that are coated with an electrode slurry, and uncoated parts U1, U2, U3, and U4 are parts of the electrode sheet ES that are not coated with the electrode slurry. The uncoated parts U1, U2, U3, and U4 may be interposed between the coated lanes L1, L2, and L3 or be on opposite ends of the electrode sheet ES in the transverse direction TD.

The measurement data may include a plurality of measured values expressed numerically. For example, the measurement data may include dimension data, e.g., a thickness and a width, of the electrode sheet ES, data of the amount of loading a coating material on the electrode sheet ES, dimension data, e.g., a width of an insulating material on the coating material and an overlapping width between the coating material and the insulating material, mismatch data between the coated lanes L1, L2 and L3 on an upper surface of the electrode sheet ES and the coated lanes L1, L2 and L3 on a lower surface of the electrode sheet E, and the like. Here, the amount of loading is the amount of the coating material loaded per unit area of the electrode sheet ES, and may be an area density of the coating material.

The measuring device 130 may include the sensing part 131 and a processor 133. The sensing part 131 may be configured to sense a physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, an optical sensor, etc. The measuring device 130 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 130 is a loading amount measuring device configured to measure the amount of loading a coating layer on a sheet material SM (e.g., a web gauge of Thermofisher Scientific) or a thickness gauge. Those of ordinary skill in the art would be able to derive an embodiment in which the measuring device includes one of the above-described sensors and is configured to sense one of the above-described measured amounts.

The roll map generating system 100 may further include an inspector configured to inspect the electrode sheet ES to collect inspection data. The inspection data may include a result of judging the quality of a portion of the electrode sheet ES and a process event. For example, the inspection data may include data about the appearance of the electrode sheet ES collected by an image-based inspection device such as a vision machine, data about disconnections and seams on the electrode sheet ES, data about a portion of the electrode sheet ES on which sampling inspection is performed, data about a portion of the electrode sheet ES to be scrapped, data about the scraped portion of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects, among others. The datum points may be formed on the electrode sheet ES at certain intervals, and other elements on the electrode sheet ES may be located based on the datum points. The inspector may be a color sensor, a seam sensor, a datum point sensor, or a vision machine.

The measurement data and the inspection data described above may be time series data. The measurement data and the inspection data may be temporally ordered. Temporal ordering is a main feature of time series data. Temporal ordering is organizing events in an order in which they occur and arrive to be processed. That is, the measurement data and the inspection data may be stored based on a point in time when measurement and inspection are performed, and may be related to time. Accordingly, each of measured values of the measurement data may be matched to time, and each of inspection values of the inspection data may be matched to time.

For example, measurement data (e.g., data of an amount of loading on the electrode sheet ES or thickness data of the electrode sheet ES) may include a series of measured values (e.g., values of the amount of loading on the electrode sheet ES or thickness values of the electrode sheet ES) and time values related to the series of measured values. The measured values and the time values may be matched in a one-to-one manner, but are not limited thereto. As another example, defect data may include a value indicating a defect and a time value related to the value indicating the defect. Here, the values indicating defects may be understood to mean that the values include information regarding at least one of the presence of defects and the types of defects.

The processor 133 may be configured to collect measurement data based on the measurement signal MS sensed by the sensing part 131. The processor 133 may be connected to the sensing part 131 by wire or wirelessly. The processor 133 may be configured to calibrate the measurement data by adding an offset measurement amount to each of the plurality of measured values of the measurement data. Due to the progress of a process and the aging of equipment, the measured values of the measurement data may be different from actual values. The processor 133 may calibrate the measured values of the measurement data based on the offset measurement amount to improve the reliability of the roll map generating system 100 and the roll map generating method. The offset measurement amount may be determined based on information given to an equipment system by a method such as a sample test.

According to example embodiments, the processor 133 may be configured to receive an electrode specification file ESF. The electrode specification file ESF may be transmitted to the processor 133 from the server 163 described below through the communication server 153. A file format of the electrode specification file ESF may be a JavaScript Object Notation (JSON), but is not limited thereto. The electrode specification file ESF may be in a file format allowing data to be stored based text, such as an extendable markup language (XML), a common separated value (CSV), a resource description framework (RDF), a spreadsheet, an open document format (ODF), a portable document format (PDF), a plane text file, or a hypertext markup language (HTML).

The electrode specification file ESF may be stored in the processor 133. The electrode specification file ESF may be stored in a memory device of the processor 133. The memory device of the processor 133 may include one of an electrically erasable programmable read-only memory (EPROM), a solid state drive (SSD), and a hard disk drive (HDD).

The electrode specification file ESF may include information of a process performed on the electrode sheet ES. More specifically, the electrode specification file ESF may include the number of the coated lanes L1, L2, and L3, the number of uncoated parts U1, U2, U3, and U4, a width of each of the coated lanes L1, L2, and L3, a width of each of the uncoated parts U1, U2, U3, and U4, and a range of normal measurement amounts (i.e., loading amounts).

The processor 133 may be configured to update measurement conditions based on the electrode specification file ESF. The measurement conditions may include the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (i.e., loading amounts).

When a recipe for the electrode sheet ES is updated due to a change of a model of a manufactured battery cell, the measurement conditions of the measuring device 130 should also be updated. For example, when there is a change in specifications of a battery cell to be manufactured through the electrode sheet ES, the processing of the electrode sheet ES and the processing of the measurement data are changed accordingly.

For example, as shown in FIG. 2, the processing of measurement data collected from the electrode sheet ES including three coated lanes L1, L2, and L3 may be different from the processing of measurement data collected from an electrode sheet including only a single coated lane. For more precise feedforward after a secondary battery manufacturing process and a coating process, parts of the measurement data should be matched to objects to be collected for matching between the parts of the measurement data and the coated lanes L1, L2, and L3. The coated lanes L1, L2, and L3 may be individually scrapped when a defect occurs and the productivity and yield of the secondary battery manufacturing process may be increased through the matching between the parts of the measurement data and the coated lanes L1, L2, and L3.

For matching between a first part of the measurement data collected from the coated lane L1 and the coated lane L1, it should be identified that the first part of the measurement data has been collected from the coated lane L1. For matching between a second part of the measurement data collected from the coated lane L2 and the coated lane L2, it should be identified that the second part of the measurement data has been collected from the coated lane L2. For matching between a third part of the measurement data collected from the coated lane L3 and the coated lane L3, it should be identified that the third part of the measurement data has been collected from the coated lane L3.

For matching between the parts of the measurement data and the coated lanes L1, L2, and L3, the processor 133 may be configured to process the measurement data based on updated measurement conditions. By updating the measurement conditions, the processor 133 may be aware that the measurement data is collected from the coated lanes L1, L2, and L3, and thus the processor 133 may be configured to perform an operation for identifying an object of the collection of the measurement data. Furthermore, the electrode sheet ES may be determined as defective when the number of coated lanes set according to the electrode specification data ESD or the electrode specification file ESF (i.e., the number of coated lanes to be formed on the electrode sheet ES by a die coater) is different from the number of sensed coated lanes.

Conventionally, the electrode specification data ESD of the server 165 that includes an ID of a model and a recipe of the model is not automatically updated by the measuring device 130, and measurement conditions are manually updated by an operator. When the measurement conditions are manually updated by the operator, the measurement conditions may be misspecified and the misspecficiation of the measurement conditions may result in a large-scale judgement error with respect to the quality of the electrode sheet ES.

According to example embodiments, the server 163 may be configured to generate the electrode specification file ESF based on the electrode specification data ESD transmitted from the server 165. The electrode specification file ESF may be transmitted to the processor 133 through the communication server 153. Because the measurement conditions of the processor 133 may be automatically updated based on the electrode specification file ESF, misspecification of the measurement conditions may be prevented and the reliability of a roll map may be improved.

The processor 133 may be configured to calculate a width of the coated lanes L1, L2, and L3 based on the measurement data. When measured values of the electrode sheet ES that are greater than or equal to a threshold CP among the measured values of the measurement data appear consecutively for a number equal to or greater than a set number, the processor 133 may match data points subsequent to the series of measured values to coated parts. Similarly, when measured values of the electrode sheet ES that are less than the threshold CP among the measured values of the measurement data appear consecutively for a number equal to or greater than to the set number, the processor 133 may match measured values of the electrode sheet ES subsequent to the series of measured values to uncoated parts.

The processor 133 may be configured to compare the measurement data with the electrode specification file ESF. More specifically, the processor 133 may be configured to compare the number of coated lanes L1, L2, and L3, the number of uncoated parts U1, U2, U3, and U4, the width of each of the coated lanes L1, L2, and L3, and the width of each of the uncoated parts U1, U2, U3, and U4, which are determined based on the measurement data, with process information of the electrode sheet ES of the electrode specification file ESF. The processor 133 may be configured to determine whether the electrode sheet ES is defective, based on the measurement data and the electrode specification file ESF.

The processor 133 may be configured to identify incorrect measurement data, based on the measurement data and the electrode specification file ESF. Examples of incorrect measurement data may include misrecognition of positions of uncoated parts and coated parts, non-sensing of a measurement amount (e.g., the amount of loading or a thickness), and the like. In general, the amount of loading and a thickness may be measured by a thermodynamic method and be incorrectly sensed due to thermal development caused by various aspects of processes.

The first controller 141 may be in operative communication with the first and second rotary encoders 121 and 123, the measuring device 130, and additional measuring devices and inspectors through a wired or wireless data network. The data network may be unidirectional or bidirectional. The data network may be implemented by a physical channel, WiFi, public networks and/or specialized networks using Bluetooth or other frequency bands. The first and second rotary encoders 121 and 123, the measuring device 130, and the additional measuring devices and inspectors may be configured to collect data from equipment, a workpiece, an intermediate product in the roll map generating system 100, and a product or to generate a signal for collecting data from thereof.

The first controller 141 may be configured to transmit the coordinate data CD to the processor 133. The processor 133 may be configured to relate the coordinate data CD with the measurement data to generate coordinate-related measurement data CMD. In general, the measurement data may be processed based on a trigger point.

As a non-limiting example, a trigger point for processing the measurement data may be the completion of scanning. For example, the sensing part 131 may scan the electrode sheet ES in the width direction of the electrode sheet ES, and the measurement data may be stored, processed, manipulated, and transmitted whenever scanning is performed. As another example, the trigger point may be completion of performing scanning a plurality of times or partial completion of scanning. Examples of the processing of the measurement data may include storing the measurement data, manipulating the measurement data (e.g., generating the coordinate-related measurement data CMD), and transmitting the measurement data.

According to example embodiments, the measuring device 130 may be configured to calibrate the coordinate data CD, based on a position of the sensing part 131. More specifically, the measuring device 130 may be configured to calibrate the coordinate data CD based on an offset length OD, to relate coordinates of the coordinate data CD with the measured values of the measurement data.

The measuring device 130 may collect measurement data of a part corresponding to (e.g., overlapping) the sensing part 131 and the coordinate data CD is collected by the second rotary encoder 123 spaced apart from the sensing part 131 as described above, and thus, a portion of the electrode sheet ES corresponding to the winding amount signal WAS generated at the same time point and a portion of the electrode sheet ES corresponding to the measurement signal MS may be different from each other.

According to example embodiments, the processor 133 may be configured to calibrate the coordinate data CD, which is collected at the same time as the measurement data, based on the offset length OD and to relate the calibrated coordinate data CD with representative values of the measured values of the measurement data to collect the coordinate-related measurement data CMD. The measured values of the measurement data may be matched to time, and measured values of the coordinate-related measurement data CMD may be matched to calibrated coordinates.

A plurality of guide rolls may be interposed between the sensing part 131 and the rewinder 113 to define a moving path of the electrode sheet ES. Accordingly, the offset length OD may be defined as a length of the electrode sheet ES between the sensing part 131 and the rewinder 113 according to the moving path of the electrode sheet ES. The offset length OD may be equal to or greater than a linear distance between the sensing part 131 and the rewinder 113.

The processor 133 may be configured to collect the coordinate-related measurement data CMD based on the measurement data and the coordinate data CD. The electrode sheet ES may include a plurality of scanning regions S1 and S2. Each of the plurality of scanning regions S1 and S2 is a part of the electrode sheet ES inspected when scanning is performed once by the sensing part 131. The scanning region S1 may include a plurality of sections S11, S12, S13, S14, S15, S16, and S17. The scanning region S2 may include a plurality of sections S21, S22, S23, S24, S25, S26, and S27.

The coordinate-related measurement data CMD may include representative values calculated from measured values of each of the plurality of sections S11, S12, S13, S14, S15, S16, S17, S21, S22, S23, S24, S25, S26, and S27 of the electrode sheet ES. The representative values of each of the plurality of sections S11, S12, S13, S14, S15, S16, S17, S21, S22, S23, S24, S25, S26, and S27 of the electrode sheet ES may include at least one among an average, a standard deviation, a median value, a maximum value, or a minimum value, among others.

The coordinate-related measurement data CMD may include representative coordinates (e.g., a start coordinate and an end coordinate) of each of the plurality of sections S11, S12, S13, S14, S15, S16, S17, S21, S22, S23, S24, S25, S26, and S27 of the electrode sheet ES. The representative values of the coordinate-related measurement data CMD may match the representative coordinates (e.g., the start coordinate and the end coordinate) of a corresponding one among the plurality of sections S11, S12, S13, S14, S15, S16, S17, S21, S22, S23, S24, S25, S26, and S27.

The sections S11 and S21 may correspond to the uncoated part U1. The sections S12 and S22 may correspond to the coated lane L1. The sections S13 and S23 may correspond to the uncoated part U2. The sections S14 and S24 may correspond to the coated lane L2. The sections S15 and S25 may correspond to the uncoated part U3. The sections S16 and S26 may correspond to the coated lane L3. The sections S17 and S27 may correspond to the uncoated part U4.

To calculate representative values of the coordinate-related measurement data CMD, the processor 133 may be configured to match the measured values of the measurement data. When measured values of the electrode sheet ES that are greater than or equal to the threshold CP among the measured values of the measurement data appear consecutively for a number equal to or greater than the set number (e.g., 5), the processor 133 may be configured to match data points subsequent to the series of measured values to the coated lanes L1, L2 and L3. Similarly, when measured values of the electrode sheet ES that are less than the threshold CP among the measured values of the measurement data appear consecutively for a number equal to or greater than the set number, the processor 133 may match measured values of the electrode sheet ES subsequent to the series of measured values to the uncoated parts U1, U2, U3 and U4.

For example, when the section S11 is scanned, the measurement values of the electrode sheet ES may be less than or equal to the threshold CP, and measurement data collected from the section S11 may be determined to be collected from the uncoated part U1 and be matched to the section S11.

When the section S12 is scanned after the scanning of the section S11, the number of a consecutive measurement values of the electrode sheet ES that are greater than or equal to the threshold CP is greater than or equal to the set number, and thus measurement data collected from the section S12 may be determined to be collected from the coated lane L1 and be matched to the section S12.

When the section S13 is scanned after the scanning of the section S12, the number of a consecutive measurement values of the electrode sheet ES that are less than the threshold CP is greater than or equal to the set number, and thus measurement data collected from the section S13 may be determined to be collected from the uncoated part U2 and be matched to the section S13.

When the section S14 is scanned after the scanning of the section S13, the number of a consecutive measurement values of the electrode sheet ES that are greater than or equal to the threshold CP is greater than or equal to the set number, and thus measurement data collected from the section S14 may be determined to be collected from the coated lane L2 and be matched to the section S14.

When the section S15 is scanned after the scanning of the section S14, the number of a consecutive measurement values of the electrode sheet ES that are less than the threshold CP is greater than or equal to the set number, and thus measurement data collected from the section S15 may be determined to be collected from the uncoated part U3 and be matched to the section S15.

When the section S16 is scanned after the scanning of the section S15, the number of a consecutive measurement values of the electrode sheet ES that are greater than or equal to the threshold CP is greater than or equal to the set number, and thus measurement data collected from the section S16 may be determined to be collected from the coated lane L3 and be matched to the section S16.

When the section S17 is scanned after the scanning of the section S16, the number of a consecutive measurement values of the electrode sheet ES that are less than the threshold CP is greater than or equal to the set number, and thus measurement data collected from the section S17 may be determined to be collected from the uncoated part U4 and be matched to the section S17.

Matching between the plurality of sections S21, S22, S23, S24, S25, S26, and S27 of the scanning region S2 and measurement data collected from the plurality of sections S21, S22, S23, S24, S25, S26, and S27 is substantially the same as that described above with respect to the plurality of sections S11, S12, S13, S14, S15, S16, and S17 of the scanning region S1.

The processor 133 may be configured to match the measured values of the measurement data of the electrode sheet ES with the corresponding sections S11, S12, S13, S14, S15, S16, S17, S21, S22, S23, S24, S25, S26, and S27 and to calculate a representative value of measured values of each of parts of the measurement data matching the sections S11, S12, S13, S14, S15, S16, S17, S21, S22, S23, S24, S25, S26, and S27.

The calculating of the representative value of each of the sections S11, S12, S13, S14, S15, S16, S17, S21, S22, S23, S24, S25, S26, and S27 may be based on measurement conditions updated according to the electrode specification file ESF. That is, the measurement condition of the processor 133 may be updated based on the number of the coated lanes L1, L2, and L3, the number of the uncoated parts U1, U2, U3, and U4, the width of each of the coated lanes L1, L2, and L3, the width of each of the uncoated parts U1, U2, U3, and U4, and the range of normal measurement amounts (e.g., loading amounts or thicknesses) of the electrode specification file ESF, and the processor 133 may process the measurement data to calculate a representative value of each of the sections S11, S12, S13, S14, S15, S16, S17, S21, S22, S23, S24, S25, S26, and S27 based on the updated measurement conditions. Accordingly, the reliability of processing the measurement data of the electrode sheet ES may be improved.

The processor 133 may be configured to generate evaluation data based on the coordinate-related measurement data CMD. The evaluation data may include a judgement value of a process of each of a plurality of sections of the electrode sheet ES. The judgement value of the process of each of the plurality of sections of the electrode sheet ES may be determined based on a comparison between a set range and measured values (or representative values of the measured values).

For example, a representative value within a first range may be determined to be normal, a representative value within a second range greater than the first range may be determined to be excessive, a representative value within a third range greater than the second range may be determined to be very excessive, a representative value within a fourth range less than the first range may be determined to be insufficient, and a representative value within a fifth range less than the fourth range may be determined to be very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 133 may be configured to transmit the coordinate-related measurement data CMD to the first controller 141. The coordinate-related measurement data CMD transmitted to the second controller 143 may be transmitted to the server 161 through the communication server 151. The second controller 143 and the communication server 151 may relay communication of data, including the coordinate-related measurement data CMD, between the server 161 and the first controller 141. However, embodiments are not limited thereto. For example, the first controller 141 may directly transmit the coordinate-related measurement data CMD to the server 161.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on the electrode specification data ESD.

For control of a process, a communication channel for connecting the second controller 143 and the server 161 via the communication server 151 may be installed between the second controller 143 and the server 161. Accordingly, data transmission through the second controller 143 may reduce resources required for the installation of the communication channel and ensure efficient data processing and management, compared to a case in which the first and second rotary encoders 121 and 123 and the measuring device 130 directly transmit an unwinding amount signal UWAS, a winding amount signal WAS, and the measurement signal MS to the first server 161 and a case in which the first controller 141 directly transmits the coordinate-related measurement data CMD to the server 161.

The communication server 151 may include a program for communication between the second controller 143 of the manufacturing equipment and the server 161. The communication server 151 may be implemented by hardware as described below. A language and protocol of the server 161 may be different from a language and protocol of the second controller 143. For example, the language of the server 161 may be SQL, and the language of the second controller 143 may be a ladder diagram.

The communication server 151 may be configured to convert the electrode specification data ESD transmitted from the server 161 into the language of the second controller 143. In addition, the communication server 151 may be configured to convert the coordinate-related measurement data CMD into the language of the server 161 and record the coordinate-related measurement data CMD in a database of the server 161.

The electrode specification data ESD may include a product ID and a recipe that identify a model of a product to be manufactured using the electrode sheet ES. More specifically, the recipe of the electrode specification data ESD may include all matters related to the process of the electrode sheet ES, e.g., the number of lots to be processed in a current process, the number of coated lanes to be formed on the electrode sheet ES, process conditions such as temperature, humidity, and pressure, and process parameters such as a moving speed of the electrode sheet ES, a discharge amount of a coating die, and pressure of pressing rolls.

The server 161 may be configured to generate a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES. A roll map may include the coordinate-related measurement data CMD described above. The roll map may further include inspection data matching the coordinates of the coordinate data CD and additional measurement data matching the coordinates of the coordinate data CD.

According to example embodiments, the server 161 may be a data processing system that supports all activities required to manage the manufacture of a secondary battery, such as work schedule management, work instructions, quality control, and work performance aggregation. The server 161 may be, for example, a manufacturing execution system (MES). The server 161 may be configured to perform inputting, processing, outputting, and communication of data necessary for the manufacture of electrodes, including the coating process, a press process, and a slitting process.

The server 161 may be configured to generate a visualization command VC for visualizing the roll map. The server 161 may be configured to transmit the visualization command VC to the display device 170. The display device 160 may display the visualized roll map VRM as shown in FIG. 4.

The visualized roll map VRM may include a plurality of visualization regions VR1, VR2, VR3, VR4, and VR5. The plurality of visualization regions VR1, VR2, VR3, VR4, and VR5 may be provided on separate regions of the display device 170. The arrangement of the plurality of visualization areas VR1, VR2, VR3, VR4, and VR5 of FIG. 4 is only an example and should not be understood as limiting the technical idea of the present invention in any sense.

The visualization area VR1 indicates a position of the unwinder 111 and an unwinding direction. The visualization area VR2 indicates a position of the rewinder 113 and a winding direction. A relative position of the electrode sheet ES may be identified based on the visualization regions VR1 and VR2. The visualization region VR1 may be adjacent to a start point on the electrode sheet ES, and the visualization region VR2 may be adjacent to an end point on the electrode sheet ES.

The visualization region VR1 of FIG. 4 may indicate that the electrode sheet ES is unwound clockwise from the electrode roll ER1, and the visualization region VR2 may indicate that the electrode sheet ES is wound counterclockwise into the electrode roll ER1.

The visualization region VR3 indicates materials applied to the electrode sheet ES. In FIG. 4, the visualization region VR3 indicates that an upper surface of an electrode plate EP is sequentially coated with a first upper slurry US1, a second upper slurry US2, and an upper insulating layer UI, and a lower surface of the electrode plate EP is sequentially coated with a first lower slurry LS1, a second lower slurry LS2, and a lower insulating layer LI. The visualization region VR3 may further indicate materials of the electrode plate EP, the first upper slurry US1, the second upper slurry US2, the upper insulating layer UI, the first lower slurry LS1, the second lower slurry LS2, and the lower insulating layer LI.

The visualization region VR4 may include a plurality of visualized lanes VUL1, VUL2, and VUL3 obtained by visualizing a plurality of coated lanes L1, L2, and L3 on the upper surface of the electrode sheet ES and a plurality of visualized lanes VLL1, VLL2, and VLL3 obtained by visualizing a plurality of coated lanes L1, L2, and L3 on the lower surface of the electrode sheet ES. The visualization region VR4 may include visualized datum points VDP indicating datum points on the electrode sheet ES. The visualized datum points VDP may be spaced from each other by a set interval (e.g., about 600 m).

In the plurality of visualized lanes VUL1, VUL2, and VUL3, the quality of the plurality of coated lanes L1, L2, and L3 on the upper surface of the electrode sheet ES may be indicated. In the plurality of visualized lanes VUL1, VUL2, and VUL3, the quality of the plurality of coated lanes L1, L2, and L3 may be displayed in colors. For example, defective parts of the plurality of visualized lanes VUL1, VUL2, and VUL3 and normal parts thereof may be displayed in different colors.

In the plurality of visualized lanes VLL1, VLL2, and VLL3, the quality of the plurality of coated lanes L1, L2, and L3 on the lower surface of the electrode sheet ES may be indicated. In the plurality of visualized lanes VLL1, VLL2, and VLL3, the quality of the plurality of coated lanes L1, L2, and L3 may be displayed in colors. For example, defective parts of the plurality of visualized lanes VLL1, VLL2, and VLL3 and normal parts thereof may be displayed in different colors.

The visualized region VR5 may include a scale indicating coordinates on the visualized roll map VRM. Coordinates of each portion of the electrode sheet ES may be roughly identified by the visualized region VR5.

The visualized region VR6 may represent coordinate-related measurement data CMD collected from the plurality of coated lanes L1, L2, and L3 on the upper and lower surfaces of the electrode sheet ES. That is, the visualized region VR6 may represent representative values of sections of the plurality of coated lanes L1, L2, and L3 on the upper and lower surfaces of the electrode sheet ES. The representative values of the respective coated lanes L1, L2, and L3 may be displayed distinctly. The representative values of the plurality of coated lanes L1, L2, and L3 may be displayed using different symbols or different colors. The visualized region VR6 may include an index IDX for distinguishing between the representative values of the plurality of coated lanes L1, L2, and L3.

In this example, because in the visualized region VR6, the representative values of the coordinate-related measurement data CMD of the plurality of coated lanes L1, L2, and L3 are in a normal range, the plurality of coated lanes L1, L2, and L3 are displayed in the same color indicating that there is no defect in the electrode sheet ES in the visualized region VR3.

The processor 133 may be configured to transmit measurement data to the server 163. According to example embodiments, the roll map generating system 100 may include an additional communication server for relaying transmission of the measurement data between the processor 133 and the server 163.

The server 163 may be configured to store and process raw measurement data of the electrode sheet ES. The server 163 may be configured to continuously monitor the processing of the electrode sheet ES based on the measurement data to manage the quality of processing the electrode sheet ES. According to example embodiments, the server 163 may be a statical process controller (SPC). The server 163 may collect and analyze manufacturing data in almost real time to identify problematic conditions in a timely manner and provide a notification to an operator before potential problems occur.

The server 165 may be a solution to managing all information and processes at all stages of life cycles of products or services of a whole global supply chain. The server 165 may be, for example, a product lifecycle management (PLM) solution. The server 165 may be configured to store data about items, components, products, manuals, requirements, engineering change orders, quality, and workflows. The server 165 may be configured to generate and store electrode specification data ESD. The server 165 may be configured to transmit the electrode specification data ESD to the first and second servers 161 and 163.

The processor 133, the first controller 141, the second controller 143, the communication server 151, the communication server 153, the server 161, the server 163, and the server 165 may be implemented by hardware, firmware, software, or a combination thereof. For example, the processor 133, the first controller 141, the second controller 143, the communication server 151, the communication server 153, the server 161, the server 163, and the server 165 may include computing devices such as workstation computers, desktop computers, laptop computers, and tablet computers. The processor 133, the first controller 141, the second controller 143, the communication server 151, the communication server 153, the server 161, the server 163, and the server 165 may include one of a simple controller, a complex processor such as a microprocessor, a CPU or a GPU, a processor configured by software, dedicated hardware, and firmware. The processor 133, the first controller 141, the second controller 143, the communication server 151, the communication server 153, the server 161, the server 163, and the server 165 may be implemented by, for example, a general-purpose computer or application-specific hardware such as a digital signal processor (DSP), a field programmable gate array (FPGA) and an application-specific integrated circuit (ASIC).

The server 161 and the server 163 may be configured to generate a roll map and an intermediate roll map. The server 161 stores and processes a large amount of data about general manufacturing and management processes in addition to the roll map, and thus, the roll map stored in the server 220 may include processed and simplified coordinate-related measurement data CMD instead of raw measurement data. The server 163 may be configured to store raw measurement data to operate as an SPC. The server 163 may transmit measurement data corresponding to a selected portion of the roll map in response to a command from the server 161.

The intermediate roll map may further include measurement data related to the roll map. That is, the intermediate roll map may further include measurement data, which is raw data, in addition to the roll map. The measurement data may be related with the roll map based on a time value. Accordingly, the intermediate roll map may provide additional insights into the quality of a workpiece, the performance of a process, overall equipment effectiveness (OEE) drill down, sensing of anomality, traceability, preventive maintenance, and predictive alerts, among others.

The server 161, the server 163, and the server 165 may include a physical server or a cloud server. The server 161, the server 163, and the server 165 may provide an operator with data and analysis results through various frameworks. A framework may include a protocol supporting data transmission so that a display device may visualize data through a user interface and provide updated visualization when new data is calculated by the servers 161 and 163. The protocol supporting data transmission may use HTML, JavaScript, and/or JSON, and the like.

The servers 161, 163 and 165 may include various application programming interfaces (APIs) for storing data in a database and other data management tools. The APIs may also be used to retrieve data from databases of various data management systems. The data management systems may provide access to a database, pull or retrieve data from the database, and generate metrics. Here, the metrics may be a tool for visualizing data. The metrics may include measured values generated in a time-series manner and may be used to monitor applications and generate a status warning.

The roll map generating system 100 may implement a plug-in architecture with an API for obtaining data to provide a plug-and-play connection of the measuring device 130 and additional measuring devices and inspectors. Accordingly, resources in a certain process step and a specific site may be easily transferred to different processes and different sites or new resources may be easily introduced into each process step and each site.

A data network between the components of the roll map generating system 100 may include various types of communication channels including unidirectional and bidirectional wired and wireless communications. For example, the data network may include an industrial protocol network such as OPC, Modbus, or ProfiNet, among others. The communication channel may be dedicated conduit communication such as universal serial bus (USB), IEEE 802 (Ethernet), IEEE 1394 (FireWire), or other high-speed data communication standards.

In some embodiments, the roll map generating system 100 may further include a manual input system that allows an operator to input manufacturing data. The roll map generating system 100 may allow an operator to input data using an input tool and a computer-based input of manufacturing data such as Excel file scraping.

According to some embodiments, the operations of the processor 133, the first controller 141, the second controller 143, the communication server 151, the communication server 153, the server 161, the server 163, and the server 165 may be implemented as instructions stored on a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The processor 133, the first controller 141, the second controller 143, the communication server 151, the communication server 153, the server 161, the server 163, and the server 165 may include firmware, software, routines, and instructions to perform the above-described operations or processes to be described below. For example, the processor 133, the first controller 141, the second controller 143, the communication server 151, the communication server 153, the server 161, the server 163, and the server 165 may be instantiated in a memory.

The first and second controllers 141 and 143 may be, for example, programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a central process unit (CPU), an input interface, an output interface, a communication interface, and first and second memory devices. The power supply may be configured to supply operating power to the CPU, the input module, the output module, the communication interface, and the first and second memory devices. The first memory device may be configured to store a system program of the PLC. The first memory device may be, for example, a read-only memory (ROM) and be configured to permanently store data for an operating system of the second controller 143. The second memory device may be configured to store a user program and data. The user program may be a program set by a user so that the CPU may perform a specific function. The data may include the coordinate-related measurement data CMD and the coordinate data CD described above. The second memory device may be configured to further store state information of states of input and output devices, and values of a timer, a counter, and other internal devices. The second memory device may be, for example, a random access memory (RAM).

The CPU may be configured to control communication between modules that implement logic and convert input signals into output operation signals. The CPU may operate based on the system program stored in the first memory device. The CPU may be configured to manipulate data based on the user program stored in the second memory device.

When the PLC operates, the CPU may be configured to scan current input conditions and the data and store them in a memory device. Next, the CPU may be configured to read and execute the user program step by step and then transmit a result to one of an output module, a communication module, and a memory device.

The input module and the output module perform isolation and signal conditioning and thus sensors and actuators may be directly connected to the input module and the output module without other circuits. The input module and the output module may be configured to transmit data between the CPU and an external device.

Conditions and data of industrial devices and production processes may be transmitted to the CPU through the input module. A result of processing performed by the CPU may be transmitted to an actuator through the output module. The input module may include, for example, a mechanical switch for position sensing, a proximity switch, a photoelectric switch, an encoder, a temperature and pressure switch, a potentiometer, a linear variable differential transformer, a strain gauge, a thermistor, a thermal transistor, and digital and analog devices such as an AC/DC thermocouple switch. The input module may provide an interface between the input device and a CPU operating based on a low DC voltage. Some input devices may generate an analog signal that is in a high-voltage range. The input module may be configured to convert the signal generated by the input device into a voltage that is in a range acceptable by the CPU.

The output module may be configured to generate a signal for control of an operation of an actuator. The output module may include a relay, a transistor, and a triac. The output module may include a relay, a contactor, a solenoid valve, a motor, and the like.

However, the above components are provided for convenience of description, and the processor 133, the first controller 141, the second controller 143, the communication server 151, the communication server 153, the server 161, the server 163, and the server 165 described above may also result from computing devices, distributed computing devices, processors, firmware, software, routines, and other devices executing routines, and instructions.

An architecture configured to generate roll maps and intermediate roll maps may be implemented by adding only the first controller 141 to the second controller 143, the communication server 151, the server 161, the communication server 153, the server 163, and the server 165, which are essential elements in modern process management systems. That is, in the roll map generating system 100 according to example embodiments, resources of an already-installed manufacturing site may be used and additional capital expenditure may be reduced. In addition, applying the same architecture as existing manufacturing equipment to newly constructed manufacturing equipment may lead to improvement of the reliability of the manufacture of a secondary battery, detection/improvement of problematic processes, and effective introduction of new processes.

Those of ordinary skill in the art would be able to easily derive a roll map generating system including an integrated PLC performing the functions of each of the first controller 141 and the second controller 143 and a roll map generation system including an integrated server performing the functions of each of the servers 161, 163, and 165, based on the above description.

### (Second Embodiment)

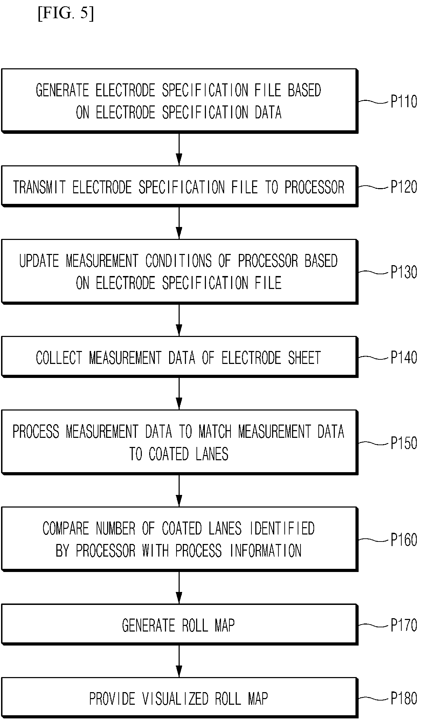

FIG. 5 is a flowchart of a roll map generating method according to example embodiments.

Referring to FIGS. 1, 2, 4, and 5, in P110, the electrode specification file ESF may be generated based on the electrode specification data ESD. The electrode specification file ESF may be generated by the server 163. The server 163 may be configured to generate the electrode specification file ESF based on the electrode specification data ESD of the server 165. The electrode specification file ESF may be, for example, in a JSON file format, but is not limited thereto.

In P120, the electrode specification file ESF may be transmitted to the processor 133. The electrode specification file ESF may be transmitted from the server 163 to the processor 133 via the communication server 153. The electrode specification file ESF may be transmitted to the processor 133 by a message transmission method such as unicast.

Next, in P130, measurement conditions of the processor 133 may be updated based on the electrode specification file ESF. The updating of the measurement conditions may include updating the number of the coated lanes L1, L2, and L3, the number of uncoated parts U1, U2, U3, and U4, the width of each of the coated lanes L1, L2, and L3, the width of each of the uncoated parts U1, U2, U3, and U4, and the range of normal measurement amounts (e.g., loading amounts).

Next, in P140, measurement data of the electrode sheet ES may be collected. The measurement data of the electrode sheet ES may be collected by the processor 133 based on a measurement signal MS. The measurement signal MS may be generated by scanning the electrode sheet ES by the sensing part 131 of the measuring device 130.

Next, in P150, the measurement data may be processed. The processing of the measurement data may include matching parts of the measurement data to corresponding ones of the plurality of sections S11, S12, S13, S14, S15, S16, S17, S21, S22, S23, S24, S25, S26, and S27, and calculating representative values of the plurality of sections S11, S12, S13, S14, S15, S16, S17, S21, S22, S23, S24, S25, S26, and S27. The measurement data may be processed by the processor 133 to generate the coordinate-related measurement data CMD. The coordinate-related measurement data CMD may include the representative value of each of the plurality of sections S11, S12, S13, S14, S15, S16, S17, S21, S22, S23, S24, S25, S26, and S27, and representative coordinates (e.g., a start coordinate and an end coordinate) matching the representative value.

In addition, those of ordinary skill in the art would be able to easily derive an embodiment in which the first controller 141 collects the coordinate-related measurement data CMD based the above description. In this case, the processor 133 may calculate the representative values of the plurality of sections S11, S12, S13, S14, S15, S16, S17, S21, S22, S23, S24, S25, S26, and S27, and transmit the representative values to the first controller 141. The first controller 141 may be configured to match the representative value of each of the plurality of sections S11, S12, S13, S14, S15, S16, S17, S21, S22, S23, S24, S25, S26, and S27 to the representative coordinates (e.g., the start coordinate and the end coordinate) thereof.

Next, in P160, the number of the plurality of coated lanes L1, L2, and L3 identified by the processor 133 is compared with process information. More specifically, the number of the plurality of coated lanes L1, L2, and L3 identified by the processor 133 may be compared with the number of the plurality of coated lanes LL1, L2, and L3 of the measurement conditions updated according to the electrode specification file ESF. The above-described comparison may be performed by the processor 133. Through the above-described comparison, the quality of the electrode sheet ES or the reliability of measurement performed by the measuring device 130 may be improved.

Next, in P170, a roll map may be generated. The roll map may be generated by the server 161. The generation of the roll map may include collecting the coordinate-related measurement data CMD, additional coordinate-related measurement data, and inspection data and storing them in a database inside or outside the server 161.

Next, in P180, a visualized roll map VRM may be provided. The providing of the visualized roll map VRM may include generating a visualization command VC, transmitting the visualization command VC to the display device 170, and displaying the visualized roll map VRM.

The visualized roll map VRM may include a visualization region VR1 indicating a position of the unwinder 111 and a direction of unwinding, a visualization region VR2 indicating a position of the rewinder 113 and a direction of winding, a visualization region VR3 indicating coating materials of the electrode sheet ES, a visualization region VR4 indicating the qualities of the plurality of coated lanes L1, L2, and L3 of the electrode sheet ES (i.e., whether there is a defect in the plurality of coated lanes L1, L2, and L3) distinctly, a visualization region VR5 including a scale indicating coordinates of the visualized roll map VRM, and a visualization region VR6 indicating the coordinate-related measurement data CMD of the plurality of coated lanes L1, L2, and L3 of the electrode sheet ES distinctly.

### (Third Embodiment)

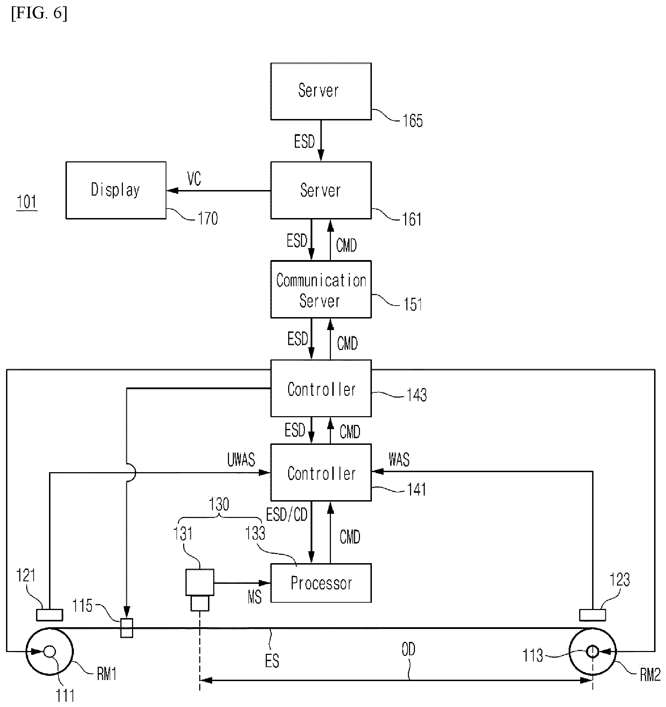

FIG. 6 is a diagram for describing a roll map generating system 101 according to other example embodiments.

Referring to FIG. 6, the roll map generating system 101 may include an unwinder 111, a rewinder 113, a processing apparatus 115, a first rotary encoder 121, a second rotary encoder 123, a measuring device 130, a first controller 141, a second controller 143, a communication server 151, servers 161 and 165, and a display device 170.

Referring to FIG. 6, the roll map generating system 101 is substantially the same as the roll map generating system 100 of FIG. 1, except that the communication server 153 and the server 163 are omitted. Accordingly, measurement condition of a processor 133 of the measuring device 130 may be updated based on an electrode specification data ESD of the server 165 transmitted through the server 161, the communication server 151, the second controller 143, and the first controller 141.

### (Fourth Embodiment)

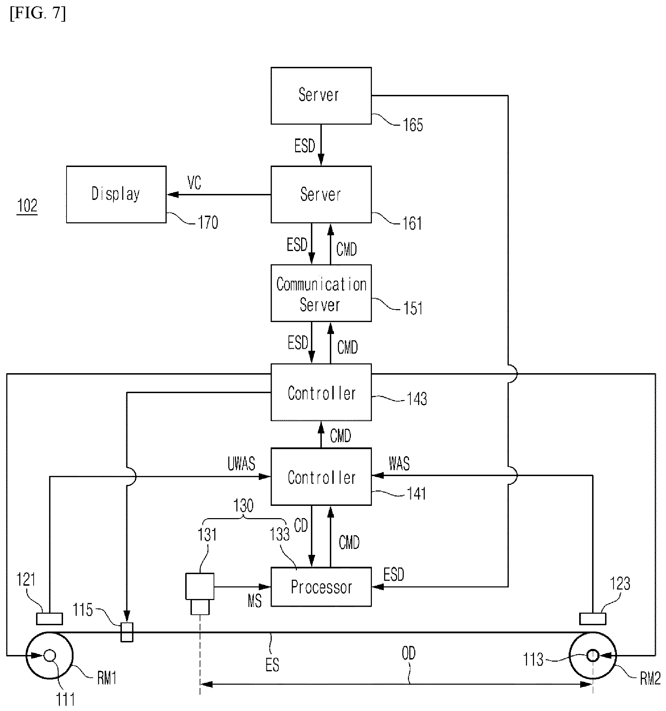

FIG. 7 is a diagram for describing a roll map generating system 102 according to other example embodiments.

Referring to FIG. 7, the roll map generating system 102 may include an unwinder 111, a rewinder 113, a processing apparatus 115, a first rotary encoder 121, a second rotary encoder 123, a measuring device 130, a first controller 141, a second controller 143, a communication server 151, servers 161 and 165, and a display device 170.

Referring to FIG. 7, the roll map generating system 102 is substantially the same as the roll map generating system 100 of FIG. 1, except that the communication server 153 and the server 163 are omitted and a dedicated communication channel is provided between the server 165 and a processor 133. Accordingly, electrode specification data ESD of the server 165 may be directly transmitted from the server 165 to the processor 133 through the dedicated communication channel between the server 165 and the processor 133. Measurement conditions of the processor 133 of the measuring device 130 may be updated based on the electrode specification data ESD directly transmitted from the server 165.

### (Fifth Embodiment)

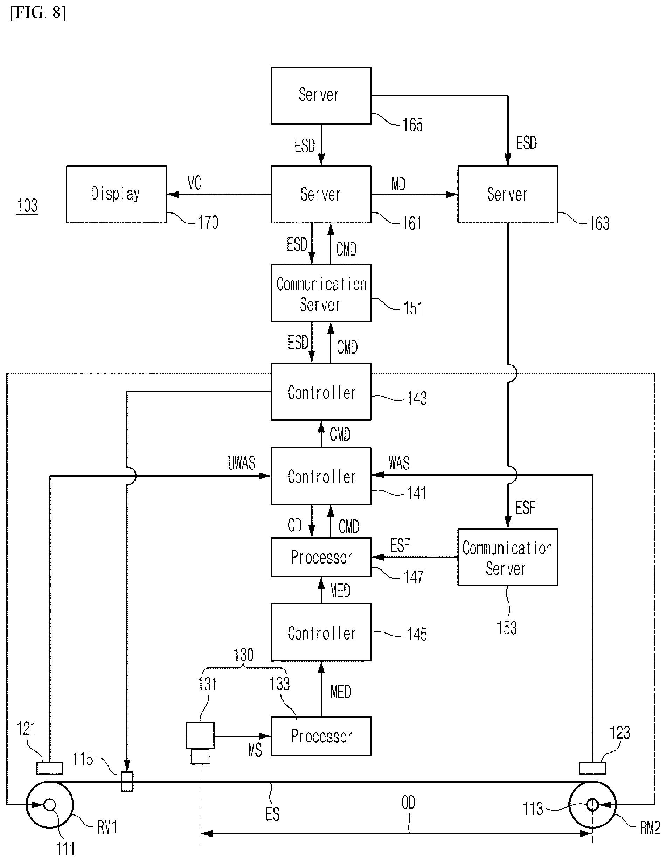

FIG. 8 is a diagram for describing a roll map generating system 103 according to other example embodiments.

Referring to FIG. 8, the roll map generating system 103 may include an unwinder 111, a rewinder 113, a processing apparatus 115, a first rotary encoder 121, a second rotary encoder 123, a measuring device 130, a first controller 141, a second controller 143, a third controller 145, a processor 147, communication servers 151 and 153, servers 161, 163, and 165, and a display device 170.

The unwinder 111, the rewinder 113, the processing apparatus 115, the first rotary encoder 121, the second rotary encoder 123, the measuring device 130, the first controller 141, the second controller 143, the communication servers 151 and 153, and the servers 161, 163, and 165 are substantially the same as those described above with reference to FIG. 1, and thus a description thereof is omitted here.

The third controller 145 may be, for example, a PLC. The third controller 145 may be configured to relay communication between the processor 133 and the processor 147. The third controller 145 may be configured to transmit data about processing, driving, and stopping of an electrode sheet ES to the processor 133.

The processor 133 is substantially the same as that of FIG. 1, but may not collect coordinate-related measurement data CMD. The processor 133 may be configured to transmit measurement data MED collected based on a measurement signal MS to the third controller 145, and the measurement data MED may be transmitted to the processor 147 via the third controller 145. The measurement data MED may be collected based on the measurement signal MS as described above with reference to FIGS. 1 to 4 and be time series data that is temporally ordered. In addition, an electrode specification file ESF may be transmitted to the processor 147 through the communication server 153, and measurement conditions of the processor 147 may be updated based on the electrode specification file ESF.

The processor 147 may be configured to receive the measurement data MED and coordinate data CD. The processor 147 may be configured to collect the coordinate-related measurement data CMD based on the measurement data MED and the coordinate data CD. The collection of the coordinate-related measurement data CMD is substantially the same as that described above with reference to FIG. 1, except that the coordinate-related measurement data CMD is collected by the processor 147, and thus, a redundant description thereof is omitted here.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising:
transmitting process information of an electrode sheet to a processor;
updating measurement conditions of the processor based on the process information;
collecting measurement data based on a measurement signal generated by measuring the electrode sheet, wherein the measurement data includes measured values, and the electrode sheet includes a plurality of coated lanes and a plurality of uncoated parts; and
processing the measurement data based on the measurement conditions updated based on the process information.

2. The roll map generating method of claim 1, wherein the measurement data includes thickness values of the electrode sheet or loading amount values of the electrode sheet.

3. The roll map generating method of claim 1, wherein the process information includes the number of the plurality of coated lanes.

4. The roll map generating method of claim 1, wherein the processor is configured to process the measurement data of the electrode sheet based on the process information.

5. The roll map generating method of claim 1, wherein the processing of the measurement data of the electrode sheet includes matching the measured values of the measurement data to the plurality of coated lanes and the plurality of uncoated parts of the electrode sheet.

6. The roll map generating method of claim 1, wherein the processor is configured to distinguish between the plurality of coated lanes and the plurality of uncoated parts based on a profile of the measurement data.

7. The roll map generating method of claim 6, further comprising comparing the number of the plurality of coated lanes distinguished by the processor with the process information.

8. The roll map generating method of claim **1,** further comprising:
matching coordinates of coordinate data of each of the plurality of coated lanes to representative values of coordinate-related measurement data to collect the coordinate-related measurement data including the representative values;
generating a roll map based on the coordinate-related measurement data; and
providing a visualized roll map based on the roll map.

9. The roll map generating method of claim 8, wherein each of the representative values is an average of measured values of the measurement data of each of a plurality of sections of the electrode sheet.

10. The roll map generating method of claim 8, wherein the visualized roll map includes a visualization region displaying coordinate-related measurement data of each of the plurality of coated lanes in a way that distinguishes them from one another.

11. The roll map generating method of claim 9, wherein the visualized roll map includes a visualization region displaying qualities of the plurality of coated lanes in a way that distinguishes them from one another

12. The roll map generating method of claim 1, wherein the process information is transmitted in a JavaScript Object Notation (JSON) format file to the processor.
